# EUROPEAN PATENT APPLICATION

(11) **EP 2 116 652 A2**
(43) Date of publication of application: **11.11.2009**
(21) Application number: 09251281.3
(22) Date of filing: 08.05.2009
(51) Int. Cl.: E02B 8/08

(54) **Fish pass**

(30) Priority: 10.05.2008 GB 0808523
(71) Applicant: Don, Bruce, Oxford OX44 9NE (GB)
(72) Inventor: Don, Bruce, Oxford OX44 9NE (GB)
(74) Representative: Brown, Michael Stanley

(57) **Abstract**

A fish pass comprises material (1) that augments a significant part of the crest of a water penning control structure (11) and a channel component (3) to convey water downstream of the water penning control structure (11), the channel component (3) having a hinged attachment to the crest of the water penning control structure (11).

## Description

### Field of the Invention

This invention relates to fish passes, i.e. devices that allow upstream migration of fish over water level regulation devices such as tilting weirs, twin leaf gates and other water penning structures. The invention has been developed in relation to eel passes, but has application to fish passes generally.

As part of their life cycle, eels migrate upstream in rivers, which are highly regulated resources with many control structures on them. These control structures pen back water at certain times of the year and allow flood water to dissipate at other times. Historically, these structures were of timber and/or were of such an age that their wetted surfaces were covered with moss and other natural materials in which the eels could get purchase and ascend such surfaces.

There has, however, been a recent move to replace traditional penning devices with modern stainless steel and plastic structures. Examples of these are the tilting weir and the twin leaf gate. These latter kinds of structures prevent upstream migration of eels by virtue of their sheer, smooth sides and confusing overflow characteristics - eels navigate over more natural barriers by moving upstream against an attracting flow through a suitable substrate.

Large scale eel passes use a pumped water flow as an attractant, but they are only viable on very large in-river barriers, are expensive to run and the pumps frequently clog.

It is accordingly an object of the present invention to provide an improved form of fish pass.

### Summary of the Invention

According to the present invention there is provided a fish pass which comprises material that augments a significant part of the crest of a water penning control structure and a channel component to convey water downstream of the water penning control structure, the channel component having a hinged attachment to the crest of the water penning control structure.

A buoyancy unit is preferably attached adjustably to the channel component.

The channel component is preferably lined with a bristle substrate, and the bristle substrate is preferably not parallel to the base of the channel component.

The fish pass may also include an upstream element that is movable pivotally relative to the channel component, and a gearbox unit may be provided for effecting controlled movement of the upstream element relative to the channel component.

### Brief Description of the Drawings

Figure 1 is a perspective view of an eel pass in accordance with a first embodiment of the present invention,
Figure 2 is a side elevation of the eel pass of Figure 1 mounted on a tilting weir gate showing how the eel pass functions at two different water penning heights,
Figure 3 is a sectional view of the main channel of the eel pass of Figure 1, showing different substrate arrangements and different channel widths,
Figure 4 is a sectional view of part of a tilting weir gate, showing typical attachment options for the weir crest augmentation material,
Figure 5 is a perspective view of an eel pass in accordance with a second embodiment of the present invention,
Figure 6 is a perspective view of a gearbox that forms part of the eel pass of Figure 5,
Figure 7 is a perspective view of the gearbox of Figure 6, but with the housing cover removed, and
Figure 8 is a reverse perspective view of the gearbox of Figure 6, with the housing cover and the shaft-end housing removed.

### Description of the Preferred Embodiments

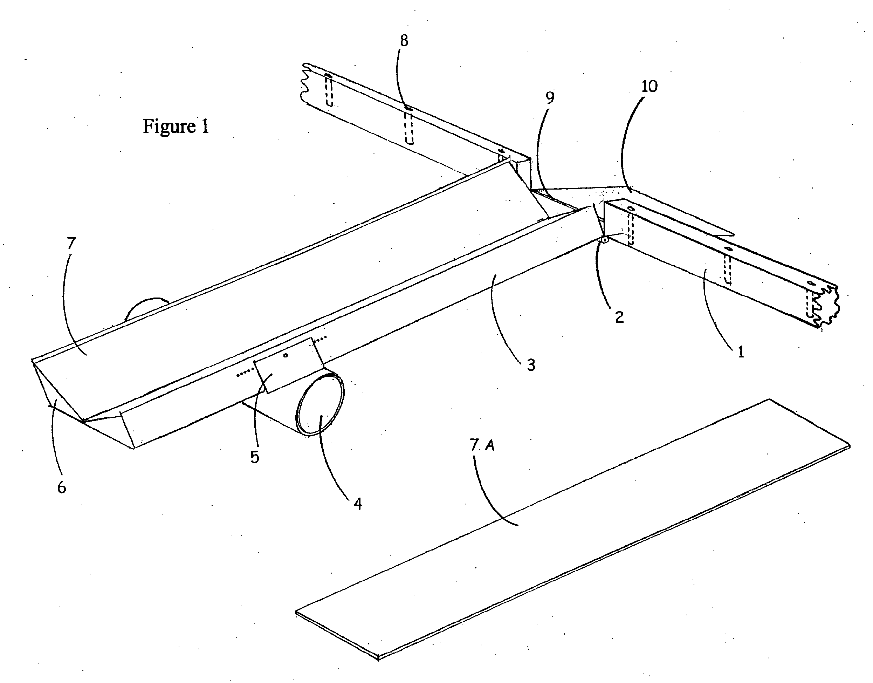

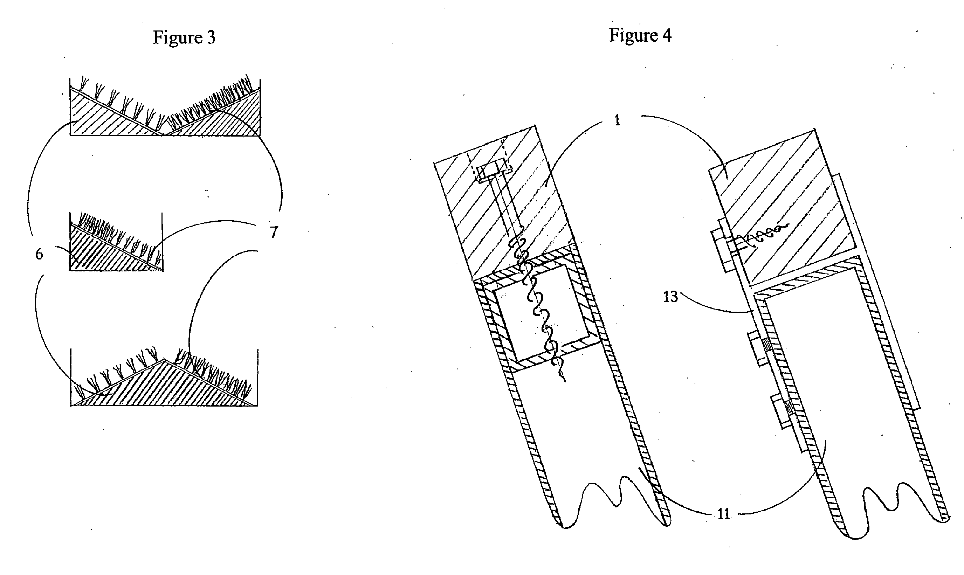

The eel pass shown in Figures 1 to 4 of the drawings comprises two strips 1 of weir crest augmentation material that are attached by suitable fixings 8, 13 to the crest of a tilting weir 11 or other appropriate water level control structure. A main channel 3 is hingedly connected at 2 to the weir crest augmentation material, with the hinge being at substantially the same level as the top of the tilting weir 11. The channel 3 is thus arranged for pivotal movement relative to the non-augmented section of the weir crest. The inside of the main channel 3 is lined with an appropriate bristle substrate 7 and the ends of the main channel 3 are partially blanked off by means of triangular end stops 6. The bristle substrate 7 carries two densities of bristles to cater for different sizes of eels and the bristle substrate 7 is fixed in a sloping arrangement to allow for different water flow rates down the channel 3. The bristles are thus inclined to the vertical so that, in cross-section, the upper surfaces of the bristles are either of V-shaped formation, or inverted V-shape, as shown in Figure 3.

The two strips 1 of weir crest augmentation material, which may be of wood or a suitable plastics material, effectively serve to raise the height of the weir for substantially the whole width of the weir so that the majority of the water flowing over the weir passes down the channel 3.

There is a planar lid or cover component 7A that is hingedly or otherwise attached to the main body of the channel 3 and this protects the ascending eels from desiccation and predation. The lid or cover component 7A is removable to facilitate cleaning of the eel pass.

Adjacent the downstream end of the channel 3 of the eel pass, there is an adjustable buoyancy unit 4 in the form of a hollow cylinder that is attached by means of an adjustment carriage 5 to guide slots in the sides of the main channel 3. The flotation effect of the buoyancy unit 4 can be adjusted for varying conditions by moving the carriage 5 along the guide slots.

The eel pass includes an upstream element 10 that is hingedly connected at 9 to the weir crest augmentation material, with the hinge being at substantially the same level as the top of the tilting weir 11. The upstream element 10 also has a covering of bristle substrate and the function of the upstream element 10 is to ensure that eels which have passed up the main channel 3 can get far enough away from the weir flow that they do not get swept back downstream. The upstream element 10 may be fixed at a pre-set angle or may be adjustable by altering its weight or profile.

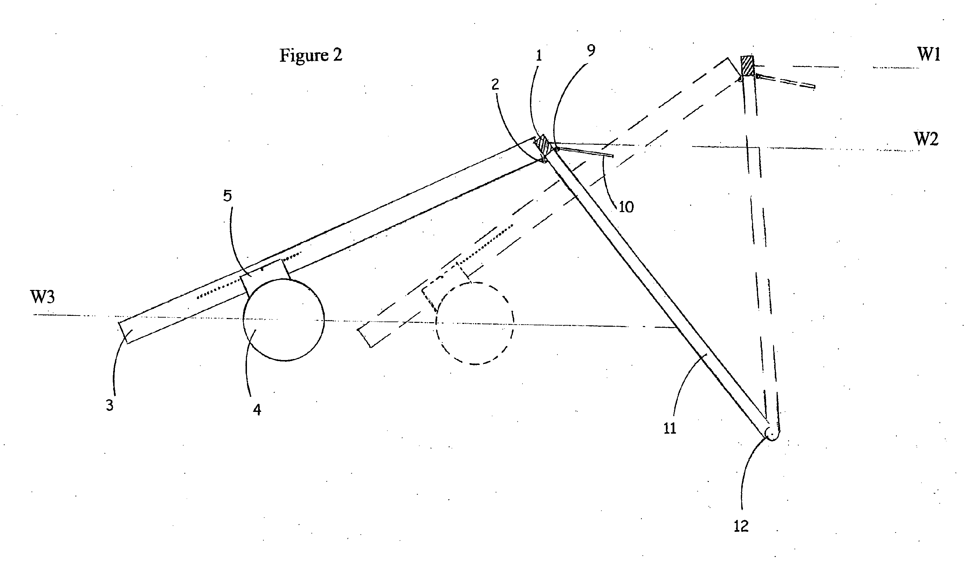

The tilting weir 11 is arranged to pivot about a pivot axis 12 and Figure 2 shows how, with the tilting weir 11 arcing around the pivot point 12, the eel pass will still maintain a water flow down the channel 3 which will remain at a suitable gradient. The line indicated at W3 in Figure 2 represents the downstream water level while the lines W1 and W2 represent two different penned water levels.

Figure 4 illustrates two possible methods of attaching the weir crest augmentation material 1 and the hinges 2 and 9 to the top surface of the weir 11 or other water penning control structure. Fixing screws 8 can be driven through the weir crest augmentation material 1 into the body of the water penning control structure 11, or an appropriately dimensioned H-section extrusion 13 can be attached to the structure 11, with the weir crest augmentation material 1 attached to the H-section extrusion 13.

An important advantage of the eel pass described above and shown in Figures 1 to 4 is that it can easily be retro-fitted to existing structures *in situ* rather than replacing the entire tilting weir 11 or other water level control structure. The eel pass can also be factory fitted for a new installation.

Although specific reference has been made to the use of the device of the present invention to assist upstream movement of eels, the pass can be used to assist upstream movement of fish generally.

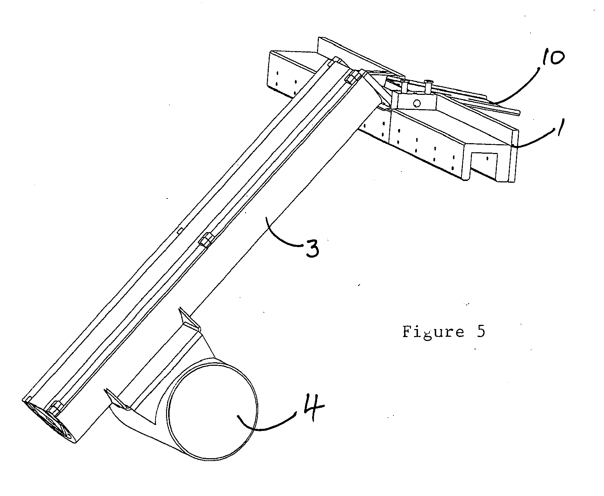

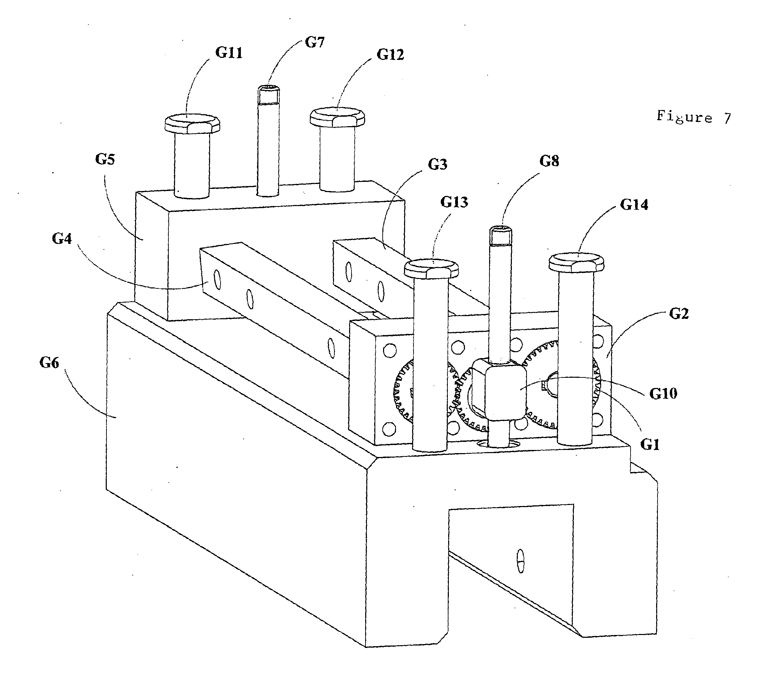

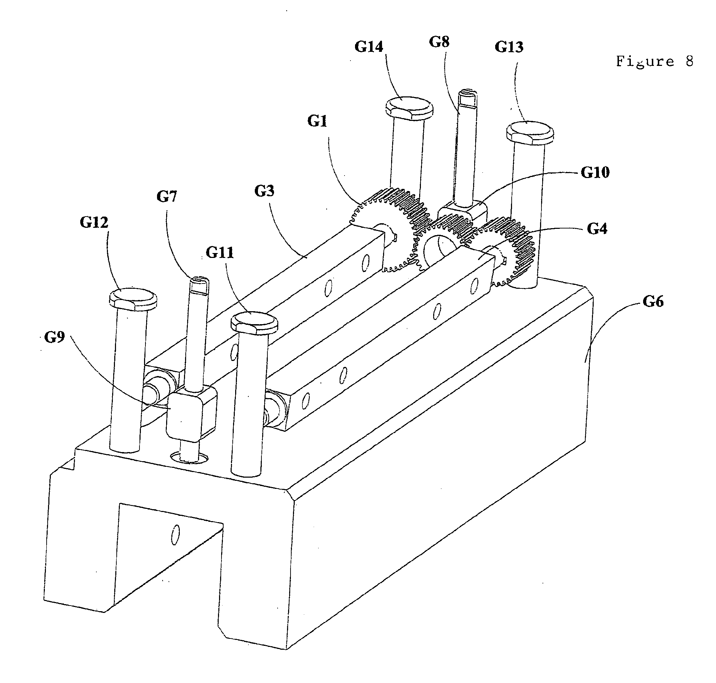

The eel pass (or fish pass) shown in Figures 5 to 8 differs from that shown in Figures 1 to 4 in that it includes a gearbox unit for effecting relative movements of the components of the eel pass. The purpose of the gearbox unit is to transmit the effects of a change in weir angle, registered by the downstream end of the eel pass, to the upstream component, thereby ensuring that this component is always angled downwards into the upstream water body.

This will allow eels or other fish to ascend the pass to its apex and enable them to crawl or swim beyond the influence of the weir crest flow.

The whole gearbox unit can be raised or lowered according to water flow conditions and the position or influence of the weir crest augmentation material.

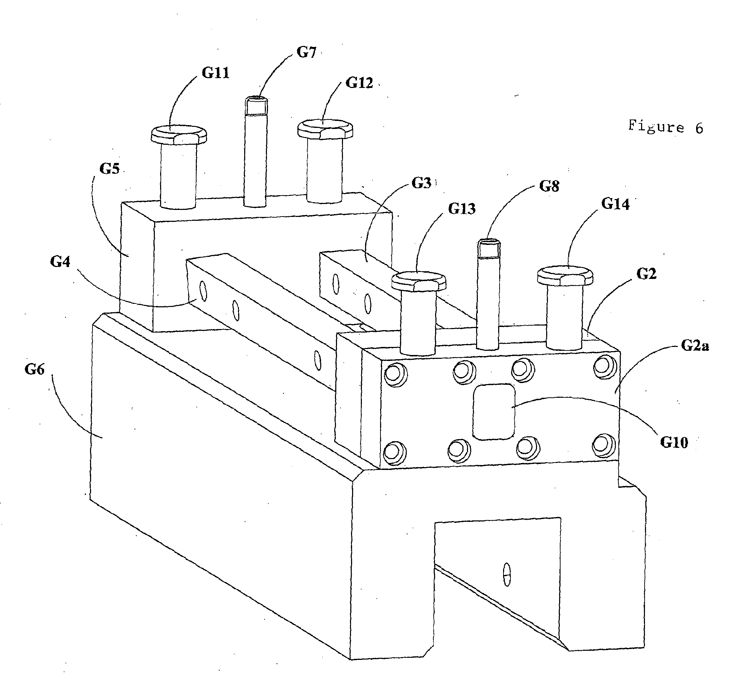

As shown in Figures 6 to 8, the gearbox unit that comprises gears G1, seated in a gear housing G2 to which a gear housing cover G2a is attached. The gearbox unit includes a downstream shaft G3, which is the attachment point for the downstream element of the eel pass. This shaft G3 transmits movement from a tilting weir in relation to the downstream element 3 of the eel fish pass to the appropriate gear. Because the gears G1 are interlinked this movement is transferred to an upstream shaft G4. The upstream element 10 of the eel pass is attached to this shaft G4 and deflects accordingly. The size and number of gears G1 can be calculated to provide an approximately constant downwards angle in the upstream element of the eel pass, regardless of the tilting angle of the weir.

Both shafts G3 and G4 are supported on the non-geared side by a shaft-end housing G5. The gears G1 in their housing G2, the shafts G3 and G4 and the shaft-end housing G5 can all be raised and lowered in relation to a weir fixing bracket G6 by the rotation of adjuster screws G7 and G8. Rotation of the screws G7 and G8 will allow either more or less water to flow down the eel pass. The adjuster screws G7 and G8 pass through captive threaded blocks G9 and G10 which are recessed into housings G2 and G5. The adjuster screws G7 and G8 terminate in the weir bracket G6 and the raising and lowering action is stabilized and supported by four guide pins G11, G12, G13 and G14. These guide pins are fixed into the weir bracket G6.

Figure 5 shows the gearbox unit of Figures 6 to 8 attached to and acting between a downstream main channel component 3, to which a buoyancy unit 4 is adjustably attached, and an upstream channel component 10, with bristle assemblies contained within both channel components 3 and 10.

## Claims

1. A fish pass which comprises material that augments a significant part of the crest of a water penning control structure and a channel component to convey water downstream of the water penning control structure, the channel component having a hinged attachment to the crest of the water penning control structure.

2. A fish pass as claimed in Claim 1, in which a buoyancy unit is attached to the channel component.

3. A fish pass as claimed in Claim 2, in which the buoyancy unit is attached adjustably to the channel component.

4. A fish pass as claimed in Claim 1, in which the channel component is lined with a bristle substrate.

5. A fish pass as claimed in Claim 4, in which the bristle substrate is not parallel to the base of the channel component.

6. A fish pass as claimed in Claim 5, which includes triangular end stops that partially blank off the upstream end of the channel component.

7. A fish pass as claimed in Claim 1, which includes an upstream element that is movable pivotally relative to the channel component.

8. A fish pass as claimed in Claim 7, which includes a gearbox unit for effecting controlled movement of the upstream element relative to the channel component.

9. A fish pass as claimed in Claim 7, in which the upstream element is of channel formation and contains a bristle substrate.

10. A fish pass as claimed in Claim 1, which includes a cover removably fitted to the channel component.
